# EUROPÄISCHE PATENTSCHRIFT

(11) **EP 1 352 492 B1**
(45) Veröffentlichungstag und Bekanntmachung des Hinweises auf die Patenterteilung: **23.03.2005**
(21) Anmeldenummer: 02706595.2
(22) Anmeldetag: 16.01.2002
(51) Int. Cl.: H04L 1/18

(54) **PARALLELE ÜBERTRAGUNG IDENTISCHER DATEN AN MEHRERE ENDGERÄTE UND RÜCKÜBERTRAGUNG VON INFORMATIONEN ÜBER DIE ÜBERTRAGUNGSQUALITÄT**
PARALLEL TRANSMISSION OF IDENTICAL DATA TO A PLURALITY OF TERMINALS AND FEEDBACK TRANSMISSION OF TRANSMISSION QUALITY INFORMATION
TRANSMISSION PARALLELE DE DONNEES IDENTIQUES VERS PLUSIEURS TERMINAUX ET RETRANSMISSION D'INFORMATIONS CONCERNANT LA QUALITE DE TRANSMISSION

(30) Priorität: 16.01.2001 DE 10101741; 16.01.2001 EP 01100915
(43) Veröffentlichungstag der Anmeldung: 15.10.2003
(73) Patentinhaber: SIEMENS AKTIENGESELLSCHAFT, 80333 München (DE)
(72) Erfinder: SCHULZ, Egon, 80993 München (DE); BOLINTH, Edgar, 41189 Mönchengladbach (DE); WEGMANN, Bernhard, 83607 Holzkirchen (DE); BING, Torsten, 80807 München (DE); KADELKA, Arndt, 50674 Köln (DE); KRÄMLING, Andreas, 52072 Aachen (DE); LOTT, Matthias, 81477 München (DE)
(86) Internationale Anmeldenummer: PCT/DE2002/000104
(87) Internationale Veröffentlichungsnummer: WO 2002/056533

(56) Entgegenhaltungen:
- EP-A- 0 797 327
- EP-A- 0 938 207
- US-A- 5 546 411

## Beschreibung

Die vorliegende Erfindung betrifft ein Verfahren zur parallelen Übertragung identischer Daten von einer Sende-/Empfangseinrichtung an mehrere Endgeräte, wobei die Übertragung zwischen der Sende-/Empfangseinrichtung und den Endgeräten zumindest teilweise über eine Funkverbindung erfolgt, sowie ein Funk-Kommunikationssystem mit mindestens einer Sende-/Empfangseinrichtung und mehreren Endgeräten, die zum Empfang von Daten ausgebildet sind, welche durch die Sende-/Empfangseinrichtung über eine Funkverbindung übertragen werden.

Ein grundlegendes Problem bei einer parallelen Übertragung von identischen Daten an mehrere Endgeräte - auch bezeichnet als Verteildienste wie Broadcast oder Multicast - ist die Garantie der Fehlerfreiheit der übertragenen Nachrichten. Insbesondere in Funk-Kommunikationssystemen oder Kommunikationssystemen, in denen zumindest teilweise eine Funkübertragung erfolgt, besteht die Gefahr, dass Daten bei der Übertragung aufgrund der Eigenschaften der Funkverbindung wie beispielsweise eines Funkkanals verfälscht werden. Bei solchen Systemen kann nur unter erheblichem Aufwand garantiert werden, dass alle Endgeräte die zu übertragenden Daten fehlerfrei erhalten haben.

Insbesondere bei zukünftigen Multimedia-Diensten, die auf den vorgenannten Methoden basieren können und die in der Regel gleichzeitig von mehreren Endgeräten genutzt werden, kann ein Datenverlust sehr kritisch sein. Daher besteht die Notwendigkeit für geeignete Maßnahmen, die garantieren, dass die zu übertragenden Daten sicher und fehlerfrei bei allen Endgeräten ankommen, wobei diese Maßnahmen immer dann Anwendung finden sollen, wenn die Daten zumindest teilweise über eine Funkverbindung übertragen werden, die eine fehlerbehaftete Datenübertragung verursachen kann.

In bisher üblichen Funk-Kommunikationssystemen ist es bekannt, bei Datenübertragungen zwischen einer Sende-/Empfangseinrichtung und einem einzelnen Endgerät (Unicast-Verbindung) zur Garantie einer weitgehenden Fehlerfreiheit der Datenübertragung eine Fehlerkorrektur in der Senderichtung (Vorwärts-Fehlerkorrektur/Forward Error Correction, FEC) wie auch eine Rückübertragung von Qualitäts-informationen über die Übertragungsqualität der übertragenen Daten, insbesondere kombiniert mit einer entsprechenden Anforderung einer erneuten Übertragung der Daten (Automatic Repeat Request ARQ) vorzusehen. Versagen FEC-Verfahren bei schlechten Bedingungen der Funkverbindung (z.B. schlechtes Funkkanalverhalten wie Schwund) oder starken Interferenzen, so können durch wiederholte Übertragung, beispielsweise gesteuert durch einen Automatic Repeat Request (ARQ), mit hoher Wahrscheinlichkeit die Daten fehlerfrei beim Empfänger-Endgerät eintreffen. Ein Beispiel für ein ARQ-Verfahren, bei welchem Qualitätsinformationen für individuelle Nutzerdaten bestimmt werden, ist in der EP 0 938 207 beschrieben.

Wurde auf der Hinstrecke von der Sende-/Empfangseinrichtung zum Empfänger-Endgerät beispielsweise auf einer logischen Verbindung, die im Fall einer Unicast-Verbindung vorliegt, ein Datenpaket gesendet, welches am Empfänger-Endgerät nicht korrekt empfangen werden konnte, so wird auf der Rückstrecke vom Empfänger-Endgerät zur Sende-/Empfangseinrichtung. der fehlerhafte Empfang durch eine negative Quittung signalisiert. Das ARQ-Verfahren veranlasst daraufhin die erneute Übertragung der fehlerhaft übertragenen Daten auf der gleichen logischen Verbindung.

In Festnetzen werden bei heute bekannten Verfahren zur parallelen Übertragung identischer Daten an mehrere Endgeräte - wie bei Multicast- und Broadcast-Verbindungen - FEC- und ARQ-Verfahren kombiniert. Zur Minimierung des Datenaufkommens, das seitens der Endgeräte durch Signalisierungsdateneinheiten (Signalling Packet Data Unit, S-PDU) entsteht, welche Qualitätsinformationen beispielsweise in Form von Quittungen übertragen, werden diese Quittungen an logischen Knotenpunkten des Festnetzes gebündelt und von dort an die Sende-/Empfangseinrichtung weitergeleitet. Zudem können Knotenpunkte, die bereits die Daten erfolgreich empfangen haben, anstatt der Sende-/Empfangseinrichtung die verfälscht übertragenen Daten an das Empfänger-Endgerät zielgerichtet wiederholt übertragen. Diese Methoden sind jedoch nicht bzw. nur eingeschränkt für Kommunikationssysteme mit Funkverbindungen anwendbar.

In Kommunikationssystemen mit Funkverbindungen werden bei bislang bekannten Methoden zur parallelen Datenübertragung identischer Daten an mehrere Endgeräte - wie bei Multicastund Broadcast-Verbindungen - lediglich FEC-Verfahren mit einer größeren Redundanz verwendet. Dies bedeutet, dass den zu übertragenen Daten eine entsprechend höhere Redundanz zur Fehlerkorrektur hinzugefügt werden muss, was ein erhöhtes Datenaufkommen auf der Hinstrecke von der Sende-/Empfangseinrichtung zum Endgerät bedeutet. Andere bekannte Methoden, eine fehlerfreiere Übertragung zu garantieren, sind einerseits die Verwendung einer geringwertigen Modulation, für die dann ein geringeres Signal/Rauschverhältnis ausreichend ist, was in einer geringeren Fehleranfälligkeit resultiert, oder andererseits ein Verfahren, bei dem prinzipiell eine mehrfache Übertragung der Daten vorgesehen wird, was jedoch zu einer Vervielfachung des Datenaufkommens führt.

Eine Rückübertragung von Qualitätsinformationen über die Übertragungsqualität der übertragenen Daten, beispielsweise durch ARQ-Verfahren, ist bei Kommunikationssystemen, die zumindest teilweise über eine Funkverbindung arbeiten, im Rahmen der bislang bekannten Verfahren nicht einsetzbar. Grund dafür ist, dass die dafür notwendige Übertragungskapazität auf der Rückstrecke vom Empfänger-Endgerät zur Sende-/Empfangseinrichtung und für die erneuten Übertragungen bei den bislang bekannten Methoden zu groß wäre, da mit einer zunehmenden Zahl der Endgeräte die Wahrscheinlichkeit für eine fehlerhafte Übertragung zunimmt und für die Endgeräte eine entsprechend große Übertragungskapazität zur Rückübertragung von Qualitätsinformationen bereitgehalten werden müsste. Die Bereithaltung einer solch großen Übertragungskapazität ist jedoch angesichts der knappen Ressourcen an Übertragungskapazitäten für Funkverbindungen wirtschaftlich nicht tragbar.

Aufgabe der vorliegenden Erfindung ist es daher, für Kommunikationssysteme mit Funkverbindungen eine Möglichkeit zur möglichst fehlerfreien parallelen Übertragung von identischen Daten an mehrere Endgeräte bereitzustellen, die mit einem möglichst geringen Aufkommen an Daten in der Richtung von einer Sende-/Empfangseinrichtung zu den Endgeräten auskommt und keine übermäßigen Übertragungskapazitäten in der Richtung von den Endgeräten zur Sende-/Empfangseinrichtung erfordert.

Diese Aufgabe wird durch die Merkmale der Ansprüche 1 und 14 gelöst.

Die Erfindung umfasst ein Verfahren zur parallelen Übertragung identischer Daten von einer Sende-/Empfangseinrichtung an mehrere Endgeräte, wobei die Übertragung zwischen der Sende-/Empfangseinrichtung und den Endgeräten zumindest teilweise über eine Funkverbindung erfolgt. Die Endgeräte können dabei beispielsweise Teilnehmer-Endgeräte sein, also Kommunikations-Endgeräte, mit denen ein Teilnehmer mit einer Einrichtung oder einem anderen Teilnehmer kommuniziert oder auf dem er Daten wie beispielsweise Multimediadaten empfängt. Die Endgeräte können aber auch beispielsweise Mess-, Steuer- oder Überwachungseinrichtungen sein, die von einer Sende-/Empfangseinrichtung angesteuert oder abgefragt werden können.

Erfindungsgemäß ist nun vorgesehen, dass von den Endgeräten nach dem Empfang der Daten Qualitätsinformationen über die Übertragungsqualität der Daten an die Sende-/Empfangseinrichtung zurückgesandt werden, wobei den Endgeräten im Rahmen der Funkverbindung gemeinsame Übertragungskapazitäten für eine Übertragung der Qualitätsinformationen mehrerer Endgeräte an die Sende-/Empfangseinrichtung bereitgestellt werden.

Entgegen den bisher bekannten Methoden aus dem Stand der Technik wird nun also vorgesehen, dass auch bei Kommunikationssystemen, bei denen parallel eine Funkverbindung zu mehreren Endgeräten aufgebaut wird, Qualitätsinformationen an die Sende-/Empfangseinrichtung zurückübertragen werden. Somit tritt kein erhöhtes Datenaufkommen in Richtung von der Sende-/Empfangseinrichtung zu den Endgeräten auf, wie es beim Stand der Technik durch die FEC-Verfahren mit erhöhter Redundanz erforderlich ist. Es werden jedoch auch keine übermäßigen Übertragungskapazitäten in der Übertragungsrichtung von den Endgeräten zu der Sende-/Empfangseinrichtung benötigt, da eine gleichzeitige Übertragung der Qualitätsinformationen vorgesehen wird, wobei auf gemeinsame Übertragungskapazitäten zugegriffen wird. Diese gemeinsamen Übertragungskapazitäten können beispielsweise ein identischer Funkkanal, eine identische Frequenz eines Frequenzmultiplexverfahrens, ein identischer Zeitschlitz eines Zeitmultiplexverfahrens oder ein identischer Code eines Codemultiplexvefahrens sein oder es können auf andere Weise Übertragungskapazitäten gleichzeitig bereitgestellt werden wie beispielsweise durch räumlich separierende Maßnahmen.

Es können daher, wenn mehrere Endgeräte Qualitätsinformationen übertragen, diese Übertragungen zeitlich in der gemeinsamen Übertragungskapazität zusammenfallen und einander dabei sogar überdecken. Dies ist jedoch nicht problematisch, da es im einfachsten Fall sogar genügen kann, wenn bei der Sende-/Empfangseinrichtung die Information ankommt, dass mindestens eines der Endgeräte gewisse Daten fehlerhaft empfangen hat. Aufgrund dieser Information kann dann eine erneute Übertragung dieser Daten erfolgen, im vorgenannten Fall beispielsweise an alle Endgeräte, wenn aus den übertragenen, sich möglicherweise überdeckenden Qualitätsinformationen keine genaueren Angaben entnehmbar sind, welche der Endgeräte die Daten fehlerhaft empfangen haben.

Für diese Erfindung kann vorgesehen werden, dass zumindest dann Qualitätsinformationen an die Sende-/Empfangseinrichtung zurückgesandt werden, wenn ein Teil der Daten fehlerhaft übertragen wurde. In diesem Fall erfolgt also nur eine negative Quittung, d.h. wenn die Daten fehlerfrei empfangen wurden, erfolgt keine Rückmeldung an die Sende-/Empfangseinrichtung. Vorteil dieses Verfahrens ist, dass das Datenaufkommen weitestgehend minimiert wird.

Es kann jedoch auch vorgesehen sein, dass nach einem Empfang der Daten vom Endgerät stets Qualitätsinformationen an die Sende-/Empfangseinrichtung zurückgesandt werden, die Informationen enthalten, welche Daten fehlerhaft und welche fehlerfrei übertragen wurde. Damit erfolgt entweder eine positive Quittierung bei fehlerfreier Übertragung oder eine negative Quittierung bei fehlerhafter Übertragung der Daten. Vorteil dieses Verfahrens ist, dass in jedem Fall eine eindeutige Kenntnis in der Sende-/Empfangseinrichtung über die Übertragungsqualität der übertragenen Daten vorliegt. Damit wird eindeutig der unerwünschte Fall ausgeschlossen, dass ein Endgerät eine negative Quittung zurücksendet, diese aber nicht bei der Sende-/Empfangseinrichtung ankommt und von einer fehlerfreien Datenübertragung ausgegangen wird.

Die erfindungsgemäße gleichzeitige Nutzung gemeinsamer Übertragungskapazitäten kann, wie bereits erwähnt, auf verschiedene Weise ermöglicht werden. So kann beispielsweise vorgesehen werden, dass eine gleichzeitige Übertragung der Qualitätsinformationen durch eine räumliche Separation der zurückgesandten Qualitätsinformationen mit Hilfe von räumlich separierenden Empfangskomponenten der Sende-/Empfangseinrichtung erfolgt.

Es können räumlich getrennte Endgeräte beispielsweise den gleichen Funkkanal nutzen, ohne dass sich die von ihnen übertragenen Daten überdecken oder stören, da eine Separierung der Datenübertragungen der Endgeräte durch die räumlich separierende Wirkung der Empfangskomponenten erfolgt. Spezielle Beispiele hierfür sind, dass eine räumliche Separation mit Hilfe von sektorisierenden Antennen oder adaptiven Antennen als Empfangskomponenten einer Sende-/Empfangseinrichtung erfolgt.

Eine alternative Möglichkeit für die gleichzeitige Nutzung gemeinsamer Übertragungskapazitäten ist, dass eine gleichzeitige Übertragung der Qualitätsinformationen durch einen gleichzeitigen Zugriff der Endgeräte auf mindestens eine gemeinsame Übertragungseinheit der Funkverbindung zu der Sende-/Empfangseinrichtung erfolgt. Es wird also nicht jedem Endgerät wie sonst üblich mindestens eine eigene Übertragungseinheit für eine Funkverbindung zur Sende-/Empfangseinrichtung zur Verfügung gestellt, sondern die Endgeräte teilen sich mindestens eine gemeinsame Übertragungseinheit einer Funkverbindung. Hier kann es grundsätzlich zu Überdeckungen der einzelnen Übertragungen der Qualitätsinformationen kommen, sofern nicht eine weitere Trennung der einzelnen Informationen vorgesehen wird, wie im folgenden noch erläutert wird. Als gleichzeitiger Zugriff auf mindestens eine gemeinsame Übertragungseinheit kann ein gleichzeitiger Zugriff beispielsweise auf mindestens eine gemeinsame Frequenz einer Frequenzmultiplex-Funkverbindung, mindestens einen gemeinsamen Zeitschlitz einer Zeitmultiplex-Verbindung oder mindestens einen gemeinsamen Code einer Codemultiplex-Verbindung erfolgen.

Soll jedoch eine komplette Überdeckung der übertragenen Qualitätsinformationen vermieden werden, oder sollen noch weitere Informationen übertragen werden, so kann eine Codierung der im Rahmen der Übertragungseinheit übertragenen Informationen zur eindeutigen Identifizierung der Endgeräte und/oder der fehlerhaft übertragenen Daten erfolgen. Diese Codierung kann insbesondere durch eine Variation von physikalischen Eigenschaften, insbesondere von Energie, Frequenz oder Dauer der Trägersignale der Funkverbindung zu der Sende-/Empfangseinrichtung während der Übertragungseinheit erfolgen. Eine spezielle Realisierung einer solchen Codierung kann im Rahmen von Mehrträgerverfahren wie OFDM erfolgen, die während einer Übertragungseinheit mehrere Träger, teilweise auch als Unterträger bezeichnet, zur Datenübertragung nutzen. Ein solches OFDM-Verfahren für Kommunikationssysteme ist beispielsweise in DE 44 41 323 beschrieben. Hier kann jeder der Träger in einem gewissen Rahmen individuell beeinflusst werden und es kann dadurch eine zusätzliche Codierung erreicht werden. Somit wird vorgesehen, dass eine Codierung von mindestens einem Träger eines Mehrträgerverfahrens, beispielsweise durch Variation seiner Energie oder der Energien gewisser Träger relativ zueinander, erfolgt.

Um nicht nur eine globale Neuübertragung der fehlerhaft gesendeten Daten einzuleiten, sondern vielmehr eine gezielte und optimierte Neuübertragung zu ermöglichen, kann vorgesehen werden, dass die Qualitätsinformationen seitens der Sende-/Empfangseinrichtung gespeichert und ausgewertet werden und in Abhängigkeit von dem Ergebnis der Auswertung eine erneute Übertragung von fehlerhaft übertragenen Daten erfolgt. Insbesondere kann hierbei als Ergebnis der Auswertung eine Identifikation zumindest derjenigen Endgeräte geliefert werden, die fehlerhafte Daten empfangen haben und eine erneute Übertragung der fehlerhaft übertragenen Daten gezielt zu den identifizierten Endgeräten erfolgt. Es kann beispielsweise bei der erneuten Übertragung der Daten eine spezielle Anpassung der Modulation (adaptive Modulation) und/oder der Codierung und/oder der Sendeleistung und/oder der räumlichen Ausstrahlungsrichtung erfolgen, mit der gezielt ein bestimmtes Endgerät oder eine bestimmte Gruppe von Endgeräten angesprochen werden kann. Damit kann insbesondere erreicht werden, dass die erneute Übertragung der fehlerhaft übertragenen Daten auf einer Funkverbindung erfolgt, die eindeutig einem identifizierten Endgerät oder einer Gruppe von identifizierten Endgeräten zugewiesen ist.

Die vorliegende Erfindung umfasst außerdem ein Funk-Kommunikationssystem, welches insbesondere zur Durchführung eines vorstehend beschriebenen Verfahrens ausgebildet ist und mindestens eine Sende-/Empfangseinrichtung und mehrere Endgeräte aufweist. Die Endgeräte sind dabei zum Empfang von Daten ausgebildet, welche durch die Sende-/Empfangseinrichtung über eine Funkverbindung übertragen werden. Erfindungsgemäß weist das Funk-Kommunikationssystem Einrichtungen zur Bereitstellung von gemeinsamen Übertragungskapazitäten für die Endgeräte für eine gleichzeitige Übertragung von Qualitätsinformationen auf, welche Informationen über die Übertragungsqualität der übertragenen Daten beinhalten. In einer bevorzugten Weiterbildung kann das Funk-Kommunikationssystem zusätzlich Einrichtungen zur Speicherung der Qualitätsinformationen und zur Auswertung der Qualitätsinformationen im Sinne einer Identifikation zumindest derjenigen Endgeräte aufweisen, welche fehlerhafte Daten empfangen haben.

Nachfolgend wird ein spezielles Ausführungsbeispiel der Erfindung anhand der Figuren 1 bis 11 erläutert.

Es zeigen
- Figur 1:: Schematische Darstellung eines erfindungsgemäßen Funk-Kommunikationssystems.
- Figur 2:: Schematische Darstellung eines gemeinsam genutzten Zeitschlitzes in einem TDMA-Verfahren zur Übertragung von Qualitätisinformationen durch die Endgeräte.
- Figur 3:: Darstellung der Übertragung von Datenpaketen und Qualitätisnformationen innerhalb einer Zeitschlitzrahmen-Struktur.
- Figur 4:: Darstellung einer Datentabelle für Qualitätsinformationen der Datenübertragung an X Endgeräte.
- Figur 5:: Schematische Darstellung einer Datenübertragung im Broadcast-Verfahren.
- Figur 6:: Darstellung der in Tabellenform gespeicherten rückübertragenen Qualitätsinformationen.
- Figur 7:: Darstellung der Neuübertragung der Daten auf Basis der Auswertung der gespeicherten Datentabelle.
- Figur 8:: Schematische Darstellung der räumlich gezielten, erneuten Aussendung spezieller Datenpakete.
- Figur 9:: Darstellung der erneuten Rückübertragung von Qualitätsinformationen und deren Speicherung in der Datentabelle.
- Figur 10:: Schematische Darstellung des gemeinsamen Zugriffes von X Endgeräten auf ein gemeinsames OFDM-Symbol zur Übertragung von Qualitätsinformationen
- Figur 11:: Darstellung der Übertragung von Datenpaketen und Qualitätsinformationen im Rahmen eines OFDM-Verfahrens.

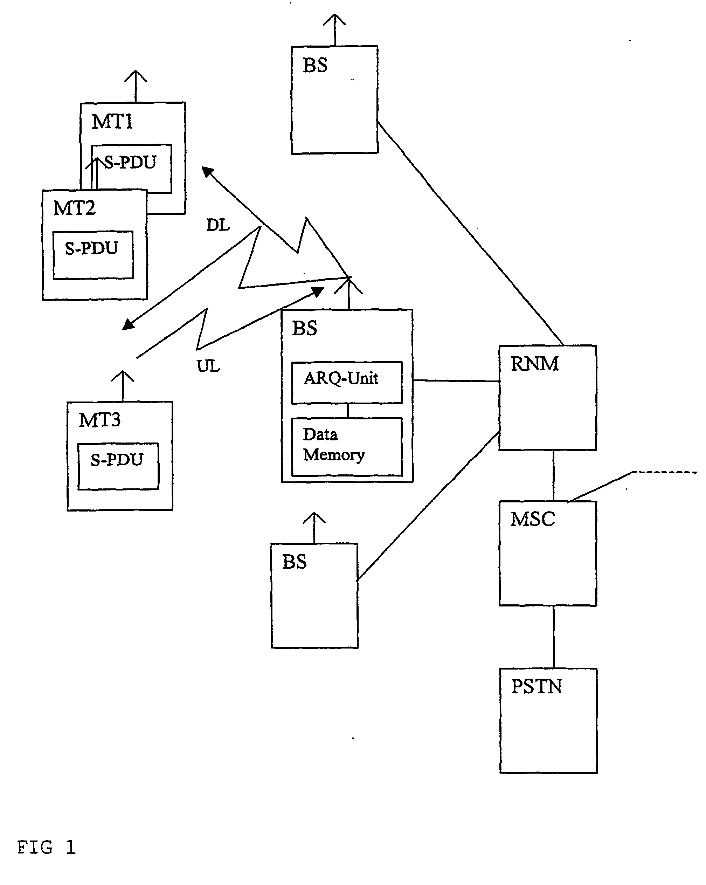

Figur 1 zeigt ein beispielhaftes Funk-Kommunikationssystem, welches eine Vielzahl von Vermittlungseinrichtungen MSC aufweist, die miteinander verbunden sind. In der Regel bildet zumindest eine dieser Vermittlungseinrichtungen MSC einen Zugang zu weiteren Kommunikationssystemen wie beispielsweise einem Festnetz-Kommunikationssystem PSTN. Die Vermittlungseinrichtungen MSC sind in solchen Funk-Kommunikationssystemen in der Regel mit einer Einrichtung RNM zum Zuteilen von Ressourcen im Funk-Kommunikationssystem verbunden, an die verschiedene Basisstationen BS als Sende-/Empfangseinrichtungen des Funk-Kommunikationssystems angebunden sind. Die Basisstationen BS stehen über Kommunikationsverbindungen mit Endgeräten, speziell Teilnehmer-Endgeräten MT1, MT2, MT3 etc. in Verbindung, wobei es sich insbesondere um mobile Teilnehmer-Endgeräte MT handeln kann. Das Funk-Kommunikationssystem ist dann als Mobilfunksystem ausgebildet.

Zwischen der Basisstation BS und den Teilnehmer-Endgeräten MT1, MT2, MT3 besteht im Beispiel nach Figur 1 eine bidirektionale Kommunikationsverbindung mit einer Aufwärtsrichtung UL (Uplink) von den Teilnehmer-Endgeräten MT1, MT2, MT3 zur Basisstation BS und einer Abwärtsrichtung DL (Downlink) von der Basisstation BS zu den Teilnehmer-Endgeräten MT1, MT2, MT3. In der Abwärtsrichtung DL werden parallel identische Daten von der Basisstation BS zu den Teilnehmer-Endgeräten MT1, MT2, MT3 übertragen, die möglichst fehlerfrei bei diesen Endgeräten ankommen sollen. Es handelt sich hierbei also um eine Multicast-Verbindung bzw. eine sogenannte Point-to-Multipoint-Verbindung.

Es ist in Figur 1 schematisch als ein Bestandteil der Basisstationen BS eine Einrichtung, hier allgemein ARQ-Unit genannt, gezeigt. In der praktischen Realisierung kann diese hier schematisch als Einheit dargestellte Einrichtung durch eine oder mehrere geeignete Einrichtungen realisiert werden. Die ARQ-Unit ist dazu ausgebildet, entsprechend dem erfindungsgemäßen Verfahren die notwendigen Abläufe zur Realisierung eines ARQ-Verfahrens bei der vorgenannten Multicast-Verbindung und der Bereitstellung der notwendigen Übertragungskapazitäten für die entsprechende Signalisierung innerhalb der Basisstation BS auszuführen. Diese Einrichtung dient insbesondere zur Auswertung der von mobilen Teilnehmer-Endgeräten MT1, MT2, MT3 empfangenen Qualitätsinformationen über die Übertragungsqualität der übertragenen Daten.

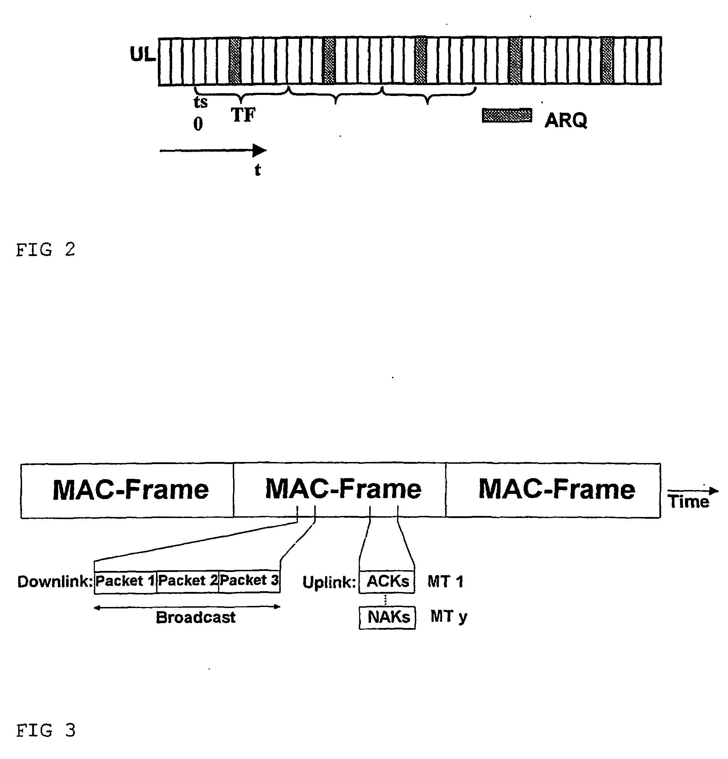

Es werden zur Übertragung der Qualitätsinformationen in dem Funk-Kommunikationssystem gemeinsame Übertragungskapazitäten für einen gleichzeitigen Zugriff durch die Endgeräte MT1, MT2, MT3 bereitgestellt. Diese Bereitstellung kann prinzipiell eine der Aufgaben der ARQ-Unit sein. Als gemeinsame Übertragungskapazität kann beispielsweise in der Aufwärtsrichtung UL bei Verwendung eines TDMA-Übertragungsverfahrens ein gemeinsamer Zeitschlitz für die Endgeräte MT1, MT2, MT3 als gemeinsame Übertragungseinheit zur Verfügung gestellt werden. Auf diesen Zeitschlitz können dann die Endgeräte bei Bedarf zur Übertragung der Qualitätsinformationen, beispielsweise zur Übertragung einer negativen Quittung, zugreifen, wobei der Zugriff auch gleichzeitig durch mehrere Endgeräte erfolgen kann, wenn mehrere Endgeräte Daten fehlerhaft empfangen haben. Ein solcher Zeitschlitz ts für die Übertragung von ARQ-Qualitätsinformationen innerhalb eines TDMA-Zeitschlitzrahmens TF der Aufwärtsverbindung UL ist schematisch in Figur 2 dargestellt. Analog kann aber auch ein gemeinsamer Code eines CDMA-Verfahrens oder eine gemeinsame Frequenz eines FDMA-Verfahrens bereitgestellt werden.

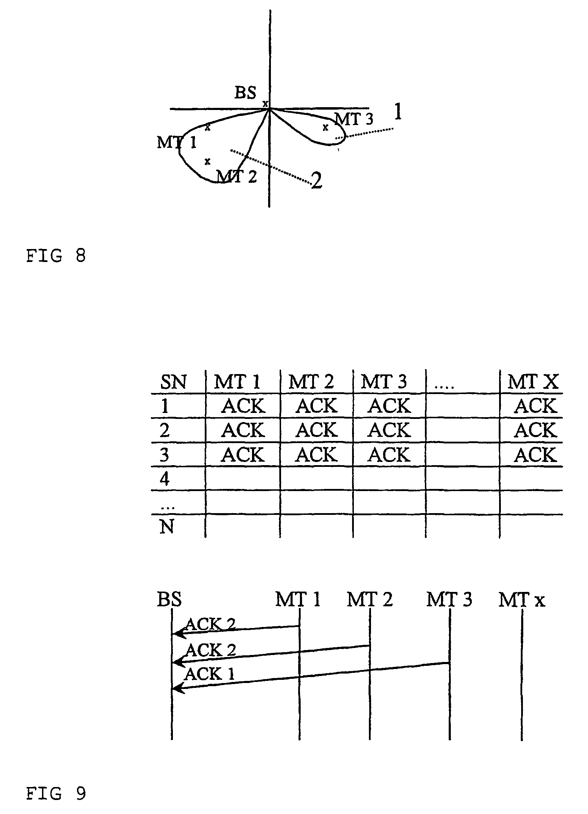

Als weitere Alternative kann aber auch eine gleichzeitige Übertragung von Qualitätsinformationen durch einen gleichzeitigen Zugriff auf räumlich separierende Antennen wie sektorisierende Antennen oder adaptive Antennen vorgesehen sein. Solche eine räumlich separierende Verbindung ist in Figur 8 schematisch dargestellt, auf die im Rahmen einer gezielten Neuübertragung von Daten im folgenden Bezug genommen wird. In der weiteren Beschreibung soll von einer gleichzeitigen Übertragung von Qualitätsinformationen innerhalb eines gemeinsamen Zeitschlitzes ausgegangen werden.

Durch die Bündelung der negativen Quittungen (Negative Acknowledgement NAK) auf ein und demselben Zeitschlitz wird der Daten-Overhead, also der durch die Realisierung des ARQ-Verfahrens nötige Signalisierungsaufwand, fest auf einen Zeitschlitz begrenzt, unabhängig von der Anzahl der beteiligten Endgeräte. Lediglich die Wahrscheinlichkeit für das Versenden eines NAKs vergrößert sich mit Zunahme der Anzahl der Empfänger-Endgeräte.

Die Qualitätsinformationen können in der Sende-/Empfangseinrichtung, die die Daten übertragen hat, im Fall der Figur 1 also in der Basisstation BS, in einem entsprechenden Datenspeicher Data Memory gespeichert werden. Diese Speicherung kann in jeder geeigneten Form erfolgen, beispielsweise in Form von Tabellen, wie im folgenden genauer ausgeführt wird. Die gespeicherten Qualitätsinformationen können dann ausgewertet werden und das Ergebnis der Auswertung zu einer gezielten Neuübertragung von fehlerhaft empfangenen Daten genutzt werden.

Durch das vorgeschlagene Verfahren können Multicast- bzw. Broadcast-Dienste mit einer beliebig kleinen Restfehlerwahrscheinlichkeit und äußerst geringem Daten-Overhead realisiert werden. Durch das Verfahren kann sichergestellt werden, dass eine wiederholte Übertragung fehlerhaft übertragener Daten durchgeführt wird, sobald ein Endgerät ein bestimmtes Datenpaket fehlerhaft empfangen hat.

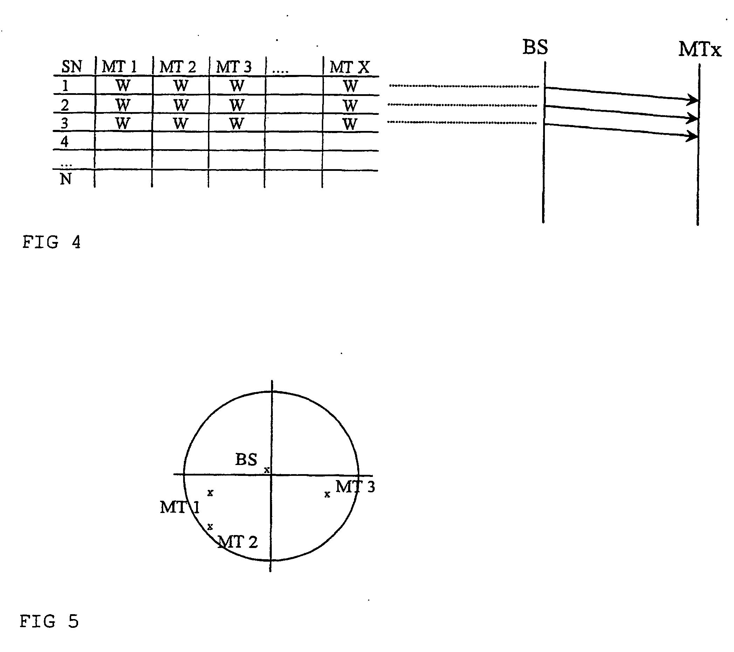

Im Beispiel nach Figur 3 werden N Datenpakete Packet 1, Pakket 2, Packet 3 ... von einer Basisstation BS in einem Broadcast-Verfahren an X Empfänger-Endgeräte MT1, MT2, MT3 bis MTX übertragen, wie auch in Figur 5 schematisch dargestellt. Im Rahmen der Übertragung der Daten wird in der Basisstation - in dem Datenspeicher Data Memory - eine Datentabelle angelegt, wie in Figur 4 dargestellt, die zur Speicherung von Qualitätsinformationen vorgesehen ist. In der Tabelle werden X Spalten für die X Endgeräte MT1 bis MTX und N Zeilen für die N übertragenen Datenpakete mit den ARQ Protokoll-Sequenznummern (Serial Number SN) 1 bis N vorgesehen. Die Werte der Tabelle können zunächst beliebig sein, z.B. einen Initialwert W = Waiting annehmen. Im vorliegenden Beispiel sei angenommen, das in jedem Fall eine Rückübertragung von Qualitätsinformationen an die Basisstation erfolgt, also sowohl positive wie auch negative Quittungen übertragen werden, je nachdem, ob die Datenübertragung fehlerfrei oder fehlerhaft erfolgte.

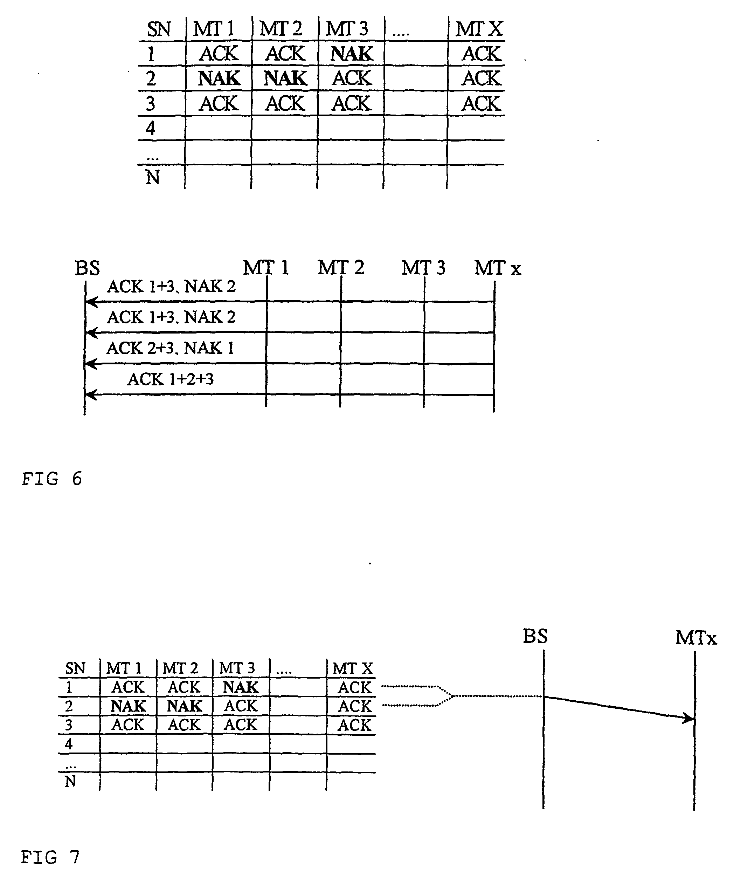

Es sollen nun beispielhaft die Endgeräte MT1 und MT2 das Datenpaket Packet2 fehlerhaft erhalten haben, das Endgerät MT3 jedoch das Datenpaket Packet1 fehlerhaft empfangen haben. Alle übrigen Datenpakete sollen fehlerfrei empfangen worden sein. Es werden folglich die entsprechenden positiven Quittungen (ACK) und negativen Quittungen (NAK) von den Endgeräten MT1 bis MTX an die Basisstation BS übertragen und in der dort abgelegten Tabelle entsprechend gespeichert, wie in Figur 6 schematisch dargestellt. Die Rückübertragung der Quittungen kann dabei gleichzeitig erfolgen, wie bereits ausgeführt. Dabei bestätigen Endgerät MT1 und MT2 insbesondere den fehlerfreien Empfang der Datenpakete Packet1 und Packet3, jedoch den fehlerhaften Empfang von Datenpaket Packet2. Entsprechend bestätigt Endgerät MT3 die Fehlerfreiheit der Datenpakete Packet2 und Packet3, jedoch die fehlerhafte Übertragung von Packet1.

Wie Figur 7 zeigt, kann nun durch Auswertung der gespeicherten Tabelle ermittelt werden, welche Datenpakete fehlerhaft übertragen wurden und erneut von der Basisstation übertragen werden müssen. Diese erneute Übertragung kann grundsätzlich ebenfalls in einem Broadcast-Verfahren nach Figur 5 erfolgen, sie kann aber auch aufgrund der genauen Kenntnis, welche Endgeräte welche Datenpakete erneut erhalten müssen, gezielt erfolgen, wie in Figur 8 dargestellt. Hier wird eine räumlich gerichtete Neuübertragung (Referenzen 1 und 2) der Datenpakete an die Endgeräte MT1, MT2 und MT3 durchgeführt, die beispielsweise durch sektorisierte Antennen oder adaptive Antennen erfolgt. Dabei können die Endgeräte MT1 und MT2 zu einer Gruppe zusammengefasst werden, die gemeinsam von einer gezielten Neuübertragung (Referenz 2) des Datenpakets Packet2 angesprochen werden. Dagegen wird das Datenpaket Packet1 unabhängig davon gezielt an das Endgerät MT3 übertragen (Referenz 1). Es werden nun wiederum Qualitätsinformationen über die Übertragungsqualität in Form von Quittungen von den Endgeräten MT1, MT2, MT3 an die Basisstation zurückgesendet, wobei nun im Beispiel nach Figur 9 der korrekte Empfang der erneut übertragenen Datenpakete bestätigt wird und die entsprechende Information in die Datentabelle eingetragen wird (Figur 9).

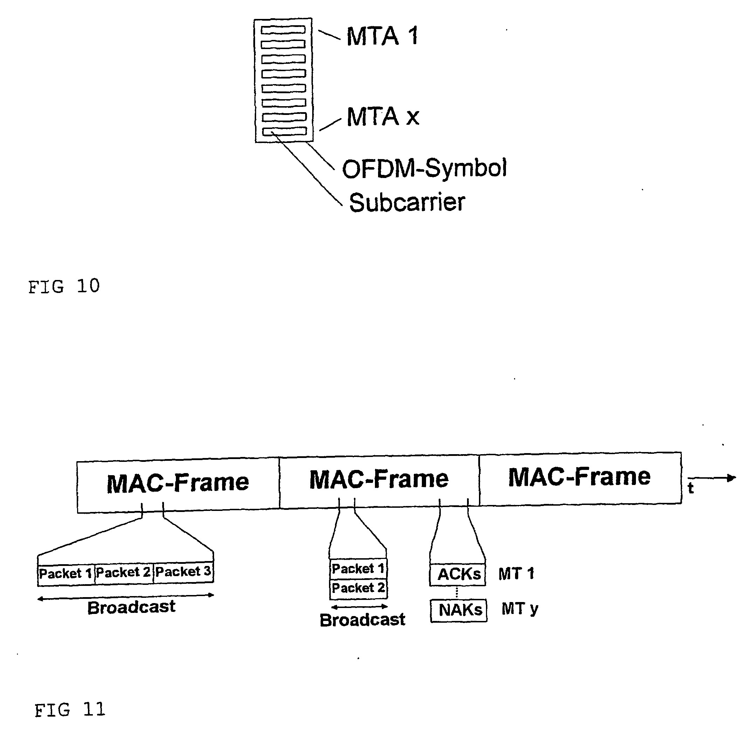

Speziell kann das vorliegende Verfahren in Mehrträgersystemen wie Systemen nach dem OFDM-Verfahren verwendet werden. Dort ist eine gleichzeitige Übertragung von negativen Quittung problemlos, was insbesondere durch das bei OFDM vorgesehene Schutzintervall garantiert wird, welches Mehrwege-Ausbreitungen kompensiert. Eventuelle Umweglaufzeiten können so bei OFDM durch das Schutzintervall ausgeglichen werden. Dieses Prinzip wird z.B. beim Gleichwellenfunk ausgenutzt. In Figur 10 ist eine solche gleichzeitige Übertragung von mehreren Quittungen innerhalb eines OFDM-Symbols schematisch dargestellt, wobei jeweils ein Endgerät MT1 bis MTX auf jeweils einen Unterträger (Subcarrier) des OFDM-Symbols zugreift. Dies ist auch in Figur 11 nochmals schematisch dargestellt. Bei einem solchen OFDM-Verfahren können auch, wie Figur 11 ebenfalls zeigt, die Datenpakete Packet1, Packet2, Packet3 etc. entweder nacheinander oder ebenfalls parallel übertragen werden. Prinzipiell ist es dabei denkbar, dass man zur parallelen Übertragung mehrerer Pakete die Unterträger eines OFDM-Symbols auf verschiedene Pakete verteilt, so dass jeweils ein Teil der Unterträger einem bestimmten Paket zugeordnet wird. Üblich ist bislang allerdings, dass z.B. lediglich die gleichen Datenpakete gleichzeitig von mehreren Sende-/Empfangseinrichtungen ausgesendet und an einem Endgerät empfangen werden (SFN). Es kann aber auch eine parallele Übertragung durch eine zusätzliche räumliche Separation der Übertragung erfolgen, wie sie in Fig. 8 dargestellt ist, d.h. insbesondere durch sektorisierende oder adaptive Antennen. Damit wird eine räumlich getrennte, gleichzeitige Übertragung von Paketen an unterschiedliche, räumlich voneinander beabstandete Endgeräte, insbesondere also innerhalb desselben Zeitschlitzes, möglich. Beispielsweise kann für kleine Datenmengen, wie sie auch bei den zu übertragenden Quittungen vorliegen, sowohl die Aufteilung auf einen Teil der Unterträger als auch die Ausnutzung von räumlich separierenden Antennen zur gleichzeitigen Übertragung erfolgen, bei großen Datenmengen wird sich jedoch eher die Ausnutzung von räumlich separierenden Antennen zur gleichzeitigen Übertragung anbieten. Sollen unterschiedliche Unterträger unterschiedliche Informationen übertragen, so kann dies dies insbesondere für die Übertragung von binären Informationen genutzt werden, z.B. 1=ACK, 0=NAK. Dabei können dann unterschiedliche Unterträger unterschiedlichen Sendern zugeordnet werden, die dann auf dem jeweiligen Unterträger die entsprechenden Informationen übertragen.

Wenn nun z.B. bei der Übertragung von Daten in Form von Datenpaketen mehrere oder sogar alle Endgeräte nach einem fehlerhaften Empfang eines bestimmten Datenpakets die gleiche Quittung (NAK) an den Sender zurückschicken und das letzte Datenpaket erneut anfordern, kann der Sender diese Quittung (NAK) in jedem Fall korrekt empfangen, obwohl die Nachricht von mehreren Stationen gesendet wurde.

Zur Erhöhung des Informationsgehaltes der negativen Quittung (NAK) können zusätzlich die Unterträger eines OFDM-Symbols unterschiedlich genutzt werden, indem sie mit unterschiedlicher Energie belegt werden. Es kann also eine zusätzliche Codierung erfolgen. Die Belegung der Unterträger mit unterschiedlicher Energie ermöglicht eine einfache Ermittlung des zusätzlichen Informationsgehaltes der Quittung an der Sende-/Empfangseinrichtung als Empfänger der Quittung, selbst wenn mehrere - eventuell nur teilweise synchronisierte - Endgeräte eine derartige Information ausgesendet haben. Die zusätzliche Information kann beispielsweise dazu genutzt werden, die fehlerhaft empfangenen Datenpakete eindeutig zu identifizieren.

So können z.B. alle geraden Unterträger eines OFDM-Symbols mit Energie belegt werden, wenn das letzte übertragene Datenpaket fehlerhaft empfangen wurde, und alle ungeraden Träger, wenn das vorletzte Paket nicht fehlerfrei empfangen wurde. Somit könnte anstatt eines sogenannten Stop-and-Go ARQ-Verfahrens, bei dem nur das jeweils zuletzt empfangene Datenpaket quittiert wird, ein Go-Back-N ARQ-Verfahren eingesetzt werden, das eine Quittierung der letzten N empfangenen Datenpakete erlaubt. Hierzu wird ein geringerer Signalisierungsaufwand benötigt, d.h. der Daten-Overhead kann weiter reduziert werden.

Es kann auch vorgesehen werden, dass der Zeitschlitz für die Übertragung einer negativen oder positiven Quittung nur halb so lang ist wie der Zeitschlitz für die Nutzdatenübertragung in der Aufwärtsrichtung.

Es seien nachfolgend die positiven Auswirkungen des vorgeschlagenen Verfahrens kurz aufgezeigt. Dabei wird ein halb so langer Zeitschlitz zur Übertragung der Quittungen vorausgesetzt wie zur Übertragung der Nutzdaten. Dann würde bei einer Multicast-Gruppengröße von 13 Stationen (12 Empfänger-Endgeräten) der Daten-Overhead für ein konventionelles ARQ-Verfahren 6/1 betragen, während sich der Daten-Overhead für das vorgeschlagene Verfahren auf 0,5/1 verringert.

Zusammenfassend kann festgestellt werden, dass durch das vorgeschlagene Verfahren anstatt einer verstärkten FEC ohne ARQ das vorgeschlagene ARQ-Verfahren, zur weiteren Optimierung gegebenenfalls in Kombination mit einem üblichen FEC, zur Reduzierung der Übertragungsfehler eingesetzt werden kann. Diese Maßnahme erlaubt eine wesentlich effizientere Nutzung der zur Verfügung stehenden Übertragungskapazität.

## Patentansprüche

1. Verfahren zur parallelen Übertragung identischer Daten (Packet 1, Packet 2, Packet 3) von einer Sende-/Empfangseinrichtung (BS) an mehrere Endgeräte (MT1, MT2, MT3), wobei die Übertragung zwischen der Sende-/Empfangseinrichtung (BS) und den Endgeräten (MT1, MT2, MT3) zumindest teilweise über eine Funkverbindung erfolgt,
**dadurch gekennzeichnet,**
**dass** von den Endgeräten (MT1, MT2, MT3) nach dem Empfang der parallel übertragenen identischen Daten (Packet 1, Packet 2, Packet 3) Qualitätsinformationen (ACK, NAK) über die Übertragungsqualität der Daten (Packet 1, Packet 2, Packet 3) an die Sende-/Empfangseinrichtung (BS) zurückgesandt werden, wobei den Endgeräten (MT1, MT2, MT3) im Rahmen der Funkverbindung gemeinsame Übertragungskapazitäten (ts; 1, 2; OFDM-Symbol) für eine Übertragung der Qualitätsinformationen (ACK, NAK) mehrerer Endgeräte (MT1, MT2, MT3) an die Sende-/Empfangseinrichtung (BS) bereitgestellt werden.

2. Verfahren nach Anspruch 1,
**dadurch gekennzeichnet,**
**dass** zumindest dann Qualitätsinformationen (ACK, NAK) an die Sende-/Empfangseinrichtung (BS) zurückgesandt werden, wenn ein Teil der Daten (Packet 1, Packet 2, Packet 3) fehlerhaft übertragen wurde.

3. Verfahren nach Anspruch 1 oder 2,
**dadurch gekennzeichnet,**
**dass** nach einem Empfang der Daten (Packet 1, Packet 2, Packet 3) vom Endgerät (MT1, MT2, MT3) stets Qualitätsinformationen (ACK, NAK) an die Sende-/Empfangseinrichtung (BS) zurückgesandt werden, die Informationen enthalten, welche Daten (Packet 1, Packet 2, Packet 3) fehlerhaft und welche fehlerfrei übertragen wurde.

4. Verfahren nach einem der Ansprüche 1 bis 3,
**dadurch gekennzeichnet,**
**dass** eine gleichzeitige Übertragung der Qualitätsinformationen (ACK, NAK) durch eine räumliche Separation der zurückgesandten Qualitätsinformationen (ACK, NAK) mit Hilfe von räumlich separierenden Empfangskomponenten der Sende-/Empfangseinrichtung (ES) erfolgt.

5. Verfahren nach Anspruch 4,
**dadurch gekennzeichnet,**
**dass** eine räumliche Separation mit Hilfe von sektorisierenden Antennen oder adaptiven Antennen erfolgt.

6. Verfahren nach einem der Ansprüche 1 bis 3,
**dadurch gekennzeichnet,**
**dass** eine gleichzeitige Übertragung der Qualitätsinformationen (ACK, NAK) durch einen gleichzeitigen Zugriff der Endgeräte (MT1, MT2, MT3) auf mindestens eine gemeinsame Übertragungseinheit der Funkverbindung zu der Sende-/Empfangseinrichtung (BS) erfolgt.

7. Verfahren nach Anspruch 6,
**dadurch gekennzeichnet,**
**dass** ein gleichzeitiger Zugriff auf mindestens einer gemeinsamen Frequenz einer Frequenzmultiplex-Funkverbindung, mindestens einem gemeinsamen Zeitschlitz einer Zeitmultiplex-Verbindung oder mindestens einem gemeinsamen Code einer Codemultiplex-Verbindung erfolgt.

8. Verfahren nach einem der Ansprüche 6 oder 7,
**dadurch gekennzeichnet,**
**dass** eine Codierung der im Rahmen der Übertragungseinheit übertragenen Informationen zur eindeutigen Identifizierung der Endgeräte (MT1, MT2, MT3) und/oder der fehlerhaft übertragenen Daten (Packet 1, Packet 2, Packet 3) erfolgt.

9. Verfahren nach Anspruch 8,
**dadurch gekennzeichnet,**
**dass** die Codierung durch eine Variation von physikalischen Eigenschaften, insbesondere von Energie, Frequenz oder Dauer der Trägersignale der Funkverbindung zu der Sende-/Empfangseinrichtung (BS) während der Übertragungseinheit erfolgt.

10. Verfahren nach einem der Ansprüche 8 oder 9,
**dadurch gekennzeichnet,**
**dass** eine Codierung von mindestens einem Träger eines Mehrträgerverfahrens erfolgt.

11. Verfahren nach einem der Ansprüche 1 bis 10,
**dadurch gekennzeichnet,**
**dass** die Qualitätsinformationen (ACK, NAK) seitens der Sende-/Empfangseinrichtung (BS) gespeichert und ausgewertet werden und in Abhängigkeit von dem Ergebnis der Auswertung eine erneute Übertragung von fehlerhaft übertragenen Daten (Packet 1, Packet 2, Packet 3) erfolgt.

12. Verfahren nach Anspruch 11,
**dadurch gekennzeichnet,**
**dass** als Ergebnis der Auswertung eine Identifikation zumindest derjenigen Endgeräte (MT1, MT2, MT3) geliefert wird, die fehlerhafte Daten (Packet 1, Packet 2, Packet 3) empfangen haben, und eine erneute Übertragung der fehlerhaft übertragenen Daten (Packet 1, Packet 2, Packet 3) gezielt zu den identifizierten Endgeräten (MT1, MT2, MT3) erfolgt.

13. Verfahren nach einem der Ansprüche 11 oder 12,
**dadurch gekennzeichnet,**
**dass** die erneute Übertragung der fehlerhaft übertragenen Daten (Packet 1, Packet 2, Packet 3) auf einer Funkverbindung erfolgt, die eindeutig einem identifizierten Endgerät (MT1, MT2, MT3) oder einer Gruppe von identifizierten Endgeräten (MT1, MT2, MT3) zugewiesen ist.

14. Funk-Kommunikationssystem, mit mindestens einer Sende-/Empfangseinrichtung (ES) und mehreren Endgeräten (MT1, MT2, MT3), die zum Empfang von parallel übertragenen identischen Daten (Packet 1, Packet 2, Packet 3) ausgebildet sind, welche durch die Sende-/Empfangseinrichtung (BS) über eine Funkverbindung übertragen werden,
**dadurch gekennzeichnet,**
**dass** das Funk-Kommunikationssystem Einrichtungen zur Bereitstellung von gemeinsamen Übertragungskapazitäten (ts; 1, 2; OFDM-Symbol) für die Endgeräte (MT1, MT2, MT3) für eine Übertragung von Qualitätsinformationen (ACK, NAK) aufweist, welche Informationen über die Übertragungsqualität der parallel übertragenen identischen Daten (Packet 1, Packet 2, Packet 3) beinhalten.

15. Funk-Kommunikationssystem nach Anspruch 14,
**dadurch gekennzeichnet,**
**dass** das Funk-Kommunikationssystem Einrichtungen (Data Memory, ARQ-Unit) zur Speicherung der Qualitätsinformationen (ACK, NAK) und zur Auswertung der Qualitätsinformationen im Sinne einer Identifikation zumindest derjenigen Endgeräte (MT1, MT2, MT3) aufweist, welche fehlerhafte Daten (Packet 1, Packet 2, Packet 3) empfangen haben.

## Claims

1. Method for the parallel transmission of identical data (Packet 1, Packet 2, Packet 3) from a transmitter/receiver device (BS) to a plurality of terminals (MT1, MT2, MT3), with the transmission between the transmitter/receiver device (BS) and the terminals (MT1, MT2, MT3) proceeding at least partially via a radio connection,
**characterized in that**
after receipt of the parallel transmitted identical data (Packet 1, Packet 2, Packet 3), quality information (ACK, NAK) about the transmission quality of the data (Packet 1, Packet 2, Packet 3) is sent back from the terminals (MT1, MT2, MT3) to the transmitter/receiver device (BS), with common transmission capacities (ts; 1, 2; OFDM symbol) being made available to the terminals (MT1, MT2, MT3) in the context of the radio connection for transmission of the quality information (ACK, NAK) from a plurality of terminals (MT1, MT2, MT3) to the transmitter/receiver device (BS).

2. Method according to Claim 1,
**characterized in that** quality information (ACK, NAK) at least is then sent back to the transmitter/receiver device (BS), if part of the data (Packet 1, Packet 2, Packet 3) has been transmitted incorrectly.

3. Method according to Claim 1 or 2,
**characterized in that** after receipt of data (Packet 1, Packet 2, Packet 3) from the terminal (MT1, MT2, MT3), quality information (ACK, NAK) is sent back continuously to the transmitter/receiver device (BS), containing information about which data (Packet 1, Packet 2, Packet 3) was transmitted incorrectly and which correctly.

4. Method according to one of Claims 1 to 3
**characterized in that**
simultaneous transmission of the quality information (ACK, NAK) proceeds by means of spatial separation of the quality information (ACK, NAK) sent back, using spatially separating receiver components in the transmitter/receiver device (BS).

5. Method according to Claim 4,
**characterized in that**
spatial separation is achieved using sectorizing antennae or adaptive antennae.

6. Method according to one of Claims 1 to 3,
**characterized in that**
simultaneous transmission of the quality information (ACK, NAK) proceeds by means of simultaneous access by the terminals (MT1, MT2, MT3) to at least one common transmission unit of the radio connection to the transmitter/receiver device (BS).

7. Method according to Claim 6,
**characterized in that**
simultaneous access is achieved to at least one common frequency of a frequency multiplex radio connection, at least one common time slot of a time multiplex connection or at least one common code of a code multiplex connection.

8. Method according to one of Claims 6 or 7,
**characterized in that**
the information transmitted in the context of the transmission unit is coded for the clear identification of the terminals (MT1, MT2, MT3) and/or the incorrectly transmitted data (Packet 1, Packet 2, Packet 3).

9. Method according to Claim 8,
**characterized in that**
coding is achieved by varying the physical properties, for example the energy, frequency or duration of the carrier signals of the radio connection to the transmitter/receiver unit (BS) during the transmission unit.

10. Method according to one of Claims 8 or 9,
**characterized in that**
at least one carrier of a multi-carrier method is coded.

11. Method according to one of Claims 1 to 10,
**characterized in that**
the quality information (ACK, NAK) is stored and analyzed in the transmitter/receiver device (BS) and a repeat transmission of incorrectly transmitted data (Packet 1, Packet 2, Packet 3) proceeds on the basis of the result of the analysis.

12. Method according to Claim 11,
**characterized in that**
as one result of the analysis identification is provided of at least those terminals (MT1, MT2, MT3), which received incorrect data (Packet 1, Packet 2, Packet 3), and a repeat transmission of the incorrectly transmitted data (Packet 1, Packet 2, Packet 3) proceeds in a targeted manner to the identified terminals (MT1, MT2, MT3).

13. Method according to one of Claims 11 or 12,
**characterized in that**
the repeat transmission of the incorrectly transmitted data (Packet 1, Packet 2, Packet 3) proceeds on a radio connection, which is clearly assigned to an identified terminal (MT1, MT2, MT3) or a group of identified terminals (MT1, MT2, MT3).

14. Radio communication system with at least one transmitter/receiver device (BS) and a plurality of terminals (MT1, MT2, MT3), which are configured to receive parallel transmitted identical data (Packet 1, Packet 2, Packet 3), which is transmitted by the transmitter/receiver device (BS) via a radio connection,
**characterized in that**
the radio communication system has devices for supplying common transmission capacities (ts; 1, 2; OFDM symbol) for the terminals (MT1, MT2, MT3) for the transmission of quality information (ACK, NAK), containing information about the transmission quality of the parallel transmitted identical data (Packet 1, Packet 2, Packet 3).

15. Radio communication system according to Claim 14,
**characterized in that**
the radio communication system has devices (Data Memory, ARQ Unit) for storing the quality information (ACK, NAK) and for analyzing the quality information in the sense of identifying at least those terminals (MT1, MT2, MT3), which received incorrect data (Packet 1, Packet 2, Packet 3).

## Revendications

1. Procédé pour la transmission parallèle de données identiques (Packet 1, Packet 2, Packet 3) d'un dispositif d'émission/réception (BS) à plusieurs terminaux (MT1, MT2, MT3), la transmission entre le dispositif d'émission/réception (BS) et les terminaux (MT1, MT2, MT3) étant réalisée au moins en partie par l'intermédiaire d'une liaison radio,
**caractérisé en ce que**
des informations (ACK, NAK) sur la qualité de transmission des données (Packet, 1, Packet 2, Packet 3) sont réémises au dispositif d'émission/réception (BS) par les terminaux (MT1, MT2, MT3) après la réception des données identiques transmises en parallèle (Packet 1, Packet 2, Packet 3), des capacités de transmission communes (ts, 1, 2 ; symbole OFDM) étant fournies aux terminaux (MT1, MT2, MT3) dans le cadre de la liaison radio pour une transmission des informations (ACK, NAK) sur la qualité de plusieurs terminaux (MT1, MT2, MT3) au dispositif d'émission/réception (BS).

2. Procédé selon la revendication 1,
**caractérisé en ce que**
des informations (ACK, NAK) sur la qualité sont réémises au dispositif d'émission/réception (BS) au moins lorsqu'une partie des données (Packet 1, Packet 2, Packet 3) a été transmise de manière erronée.

3. Procédé selon la revendication 1 ou 2,
**caractérisé en ce que**
des informations (ACK, NAK) sur la qualité sont toujours réémises au dispositif d'émission/réception (BS) par le terminal (MT1, MT2, MT3) après une réception des données (Packet 1, Packet 2, Packet 3), celles-ci contenant des informations indiquant quelles données (Packet 1, Packet 2, Packet 3) ont été transmises de manière erronée et lesquelles ont été transmises sans erreur.

4. Procédé selon l'une quelconque des revendications 1 à 3,
**caractérisé en ce**
**qu'**une transmission simultanée des informations (ACK, NAK) sur la qualité est réalisée par une séparation dans l'espace des informations (ACK, NAK) réémises, sur la qualité, à l'aide de composants de réception du dispositif d'émission/réception (BS), séparant dans l'espace.

5. Procédé selon la revendication 4,
**caractérisé en ce que**
une séparation dans l'espace est réalisée à l'aide d'antennes sectorisantes ou d'antennes adaptatives.

6. Procédé selon l'une quelconque des revendications 1 à 3,
**caractérisé en ce que**
une transmission simultanée des informations (ACK, NAK) sur la qualité est réalisée par un accès simultané des terminaux (MT1, MT2, MT3) à au moins une unité de transmission commune de la liaison radio vers le dispositif d'émission/réception (BS).

7. Procédé selon la revendication 6,
**caractérisé en ce que**
un accès simultané à au moins une fréquence commune d'une liaison radio à multiplexage par partage des fréquences, à au moins un créneau temporel commun d'une liaison à multiplexage par partage de temps ou à au moins un code commun d'une liaison à multiplexage par répartition en code est réalisé.

8. Procédé selon l'une des revendications 6 ou 7,
**caractérisé en ce que**
un codage des informations transmises dans le cadre de l'unité de transmission est réalisée pour l'identification univoque des terminaux (MT1, MT2, MT3) et/ou des données (Packet 1, Packet 2, Packet 3) transmises de manière erronée.

9. Procédé selon la revendication 8,
**caractérisé en ce que**
le codage est réalisé par une variation de propriétés physiques, notamment d'énergie, de fréquence ou de durée des signaux porteurs de la liaison radio vers le dispositif d'émission/réception (BS) pendant l'unité de transmission.

10. Procédé selon l'une des revendications 8 ou 9,
**caractérisé en ce que**
un codage d'au moins une porteuse d'un procédé à porteuses multiples est réalisé.

11. Procédé selon l'une quelconque des revendications 1 à 10,
**caractérisé en ce que**
les informations (ACK, NAK) sur la qualité sont mémorisées du côté du dispositif d'émission/réception (BS) et évaluées et **en ce qu'**une nouvelle transmission de données (Packet 1, Packet 2, Packet 3) transmises de manière erronée est réalisée en fonction du résultat de l'évaluation.

12. Procédé selon la revendication 11,
**caractérisé en ce que**
une identification d'au moins les terminaux (MT1, MT2, MT3), qui ont reçu des données erronées (Packet 1, Packet 2, Packet 3) est fournie comme résultat de l'évaluation, et **en ce qu'**une nouvelle transmission des données (Packet 1, Packet 2, Packet 3) transmises de manière erronée est réalisée de manière précise vers les terminaux identifiés (MT1, MT2, MT3).

13. Procédé selon l'une des revendications 11 ou 12,
**caractérisé en ce que**
la nouvelle transmission des données (Packet 1, Packet 2, Packet 3) transmises de manière erronée est réalisée sur une liaison radio qui est affectée de manière univoque à un terminal identifié (MT1, MT2, MT3) ou à un groupe de terminaux identifiés (MT1, MT2, MT3).

14. Système de radiocommunication comprenant au moins un dispositif d'émission/réception (BS) et plusieurs terminaux (MT1, MT2, MT3) exécutés pour la réception de données (Packet 1, Packet 2, Packet 3) identiques, transmises en parallèle, lesquelles sont transmises par le dispositif d'émission/réception (BS) par l'intermédiaire d'une liaison radio,
**caractérisé en ce que**
le système de radiocommunication présente des dispositifs pour fournir des capacités de transmission communes (ts, 1, 2 ; symbole OFDM) pour les terminaux (MT1, MT2, MT3), pour une transmission d'informations (ACK, NAK) sur la qualité, lesquelles comprennent des informations sur la qualité de transmission des données (Packet 1, Packet 2, Packet 3) identiques, transmises en parallèle.

15. Système de radiocommunication selon la revendication 14,
**caractérisé en ce que**
le système de radiocommunication présente des dispositifs (Data Memory, ARQ-Unit) pour la mémorisation des informations (ACK, NAK) sur la qualité et pour l'évaluation des informations sur la qualité, au sens d'une identification d'au moins les terminaux (MT1, MT2, MT3) qui ont reçu des données erronées (Packet 1, Packet 2, Packet 3).
